(19) **Europäisches Patentamt**
**European Patent Office**
**Office européen des brevets**

(11) **EP 4 676 050 A1**

(12) **EUROPEAN PATENT APPLICATION**

(43) Date of publication:
**07.01.2026 Bulletin 2026/02**

(21) Application number: **24306091.0**

(22) Date of filing: **02.07.2024**

(51) International Patent Classification (IPC):
*H04N 19/176* (2014.01)   *H04N 19/593* (2014.01)

(52) Cooperative Patent Classification (CPC):
**H04N 19/593; H04N 19/176**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **NASER, Karam**
**35250 MOUAZE (FR)**
- **BORDES, Philippe**
**35890 LAILLE (FR)**
- **LO BIANCO, Federico**
**35700 RENNES (FR)**
- **BALCILAR, Muhammet**
**35830 BETTON (FR)**

(74) Representative: **Vossius & Partner**
**Patentanwälte Rechtsanwälte mbB**
**Siebertstraße 3**
**81675 München (DE)**

(54) **REGULARIZATION FOR PREDICTION FILTERS**

(57)    Systems, methods, and instrumentalities are disclosed for performing regularization in prediction filters. A device, which may be an encoder device and/or a decoder device, may determine for a picture block that a prediction mode is one of IntraTMP or IBC. The device may determine, using the prediction mode, a prediction block associated with the picture block. The device may generate, based on a current template and a reference template, a first matrix associated with pixel values in the reference template and/or a second matrix associated with vectors associated with the current template. The device may generate a regularization matrix. The device may be configured to determine, using the at least one matrix associated with the filtering function and the regularization matrix, filtering parameters. The device may filter the prediction block using the determined filtering parameters and may decode and/or encode the picture block using the filtered prediction block.

**FIG. 15**

EP 4 676 050 A1

## Description

### BACKGROUND

Video coding systems may be used to compress digital video signals, e.g., to reduce the storage and/or transmission bandwidth needed for such signals. Video coding systems may include, for example, block-based, wavelet-based, and/or object-based systems.

### SUMMARY

Systems, methéods, and instrumentalities are disclosed for a device configured for one or more of video coding (e.g., encoding and/or decoding), distribution, or consumption.

A device may be configured to implement regularization in prediction filters. A device, which may be, for example, an encoder for video encoding and/or a decoder for video decoding, may determine for a picture block that a prediction mode is one of intra template matching (IntraTMP) mode or intra-block copy (IBC) mode. The device may determine, using the prediction mode, a prediction block associated with the picture block.

The device may be configured to generate, based on a current template and a reference template, at least one matrix associated with a filtering function. In examples, the at least one matrix associated with the filtering function may comprise a first matrix associated with pixel values in the reference template. The at least one matrix associated with the filtering function may further comprise a second matrix associated with vectors associated with the current template.

The device may be configured to generate a regularization matrix. The device may generate the regularization matrix based on the prediction mode. For example, the device may generate a first regularization matrix if the prediction mode is IntraTMP and may generate a second regularization matrix if the prediction mode is IBC mode. The device may generate the regularization matrix based on the prediction mode and a block size. For example, if the block size is above a threshold, a first regularization matrix may be generated, and if the block size is below the threshold, a second regularization matrix may be generated. The device may generate a regularization matrix based on a received parameter value. For example, depending on a particular parameter value that is received, a first or second regularization matrix may be generated.

The device may be configured to determine, using the at least one matrix associated with the filtering function and the regularization matrix, filtering parameters. The device may filter the prediction block using the determined filtering parameters and may decode and/or encode the picture block using the filtered prediction block.

The device may be configured to adaptively employ regularization. Depending upon whether a comparison of the prediction block with a reconstructed template, the device may or may not employ regularization. If the device determines, based on a comparison of the prediction block with a reconstructed template, a template cost exceeds a threshold, the device may implement regularization in the IntraTMP or IBC mode filtering. However, if the device determines based on a comparison of a prediction block with a reconstructed template, the template cost does not exceed the threshold. The device may then, on a condition the second template cost does not exceed the threshold, determine filtering parameters using the at least one matrix associated with the filtering function (and not with a regularization matrix), and filter the second prediction block using the determined second filtering parameters.

### BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a system in which various aspects and examples may be implemented.

FIG. 5 illustrates an example reference area (e.g., with its paddings) used to derive the filter coefficients.

FIG. 6 illustrates an example spatial part of a convolutional filter.

FIG. 7 illustrates an example of four Sobel based gradient patterns for gradient linear model (GLM).

FIG. 8 illustrates an example of non-downsampled luma samples.

FIG. 9 illustrates an example reference area for block vector guided convolutional cross-component model (BVG-CCCM).

FIG. 10 illustrates an example of spatial samples used for gradient and location convolutional cross-component model (GL-CCCM).

FIG. 11 illustrates example down-sampling filters used in cross-component models.

FIG. 12 illustrates three example extrapolation filter-based intra prediction (EIP) filter shapes.

FIG. 13 illustrates three example types of reconstructed area for EIP filter.

FIG. 14 illustrates an example intra template matching search area used.

FIG. 15 illustrates example process steps for building prediction with convolutional cross-component model (CCCM) or EIP mode.

FIG. 16 illustrates an example regularized intra block copy (IBC)/intra template matching prediction (TMP) filtering process.

FIG. 17 illustrates an example adaptive regularization process.

## DETAILED DESCRIPTION

A more detailed understanding may be had from the following description, given by way of example in conjunction with the accompanying drawings.

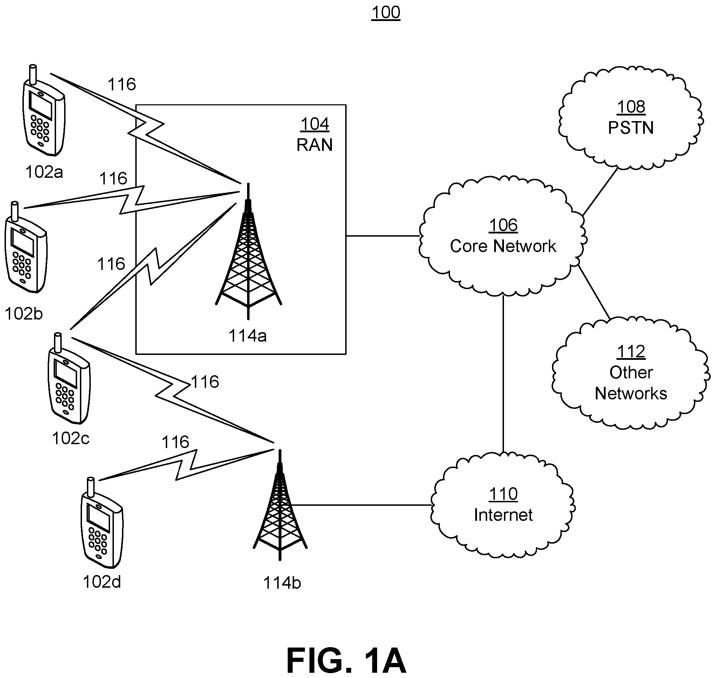

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for example using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

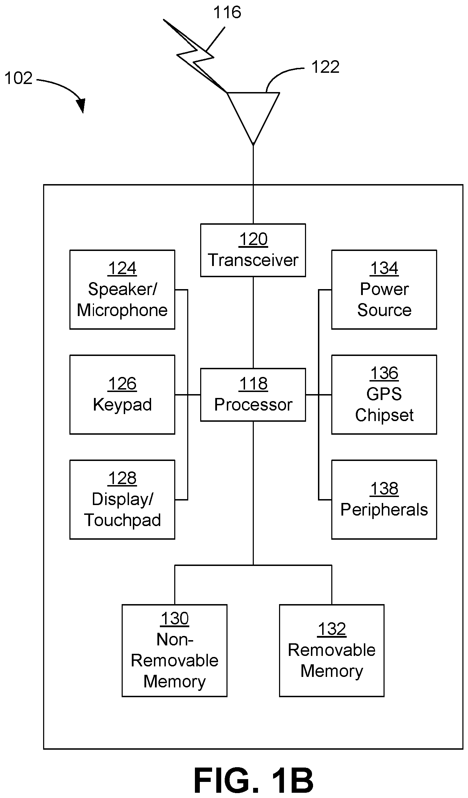

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

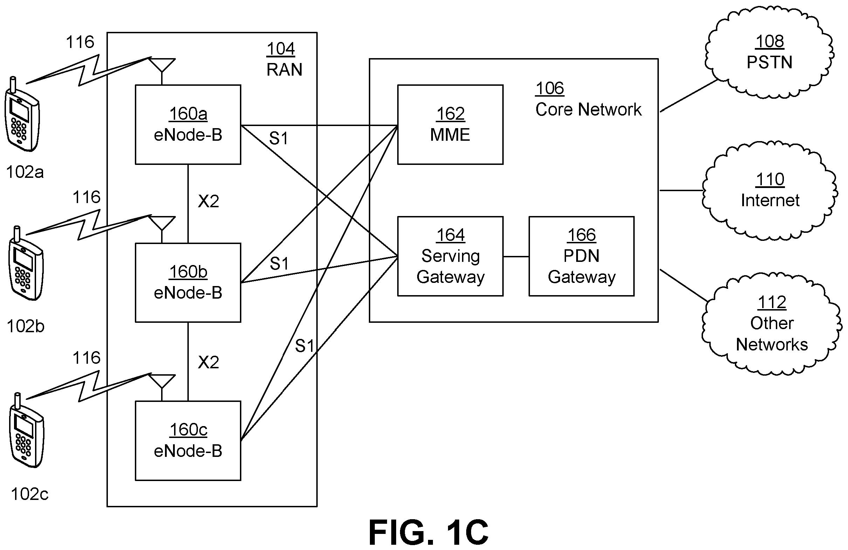

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g.,

MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

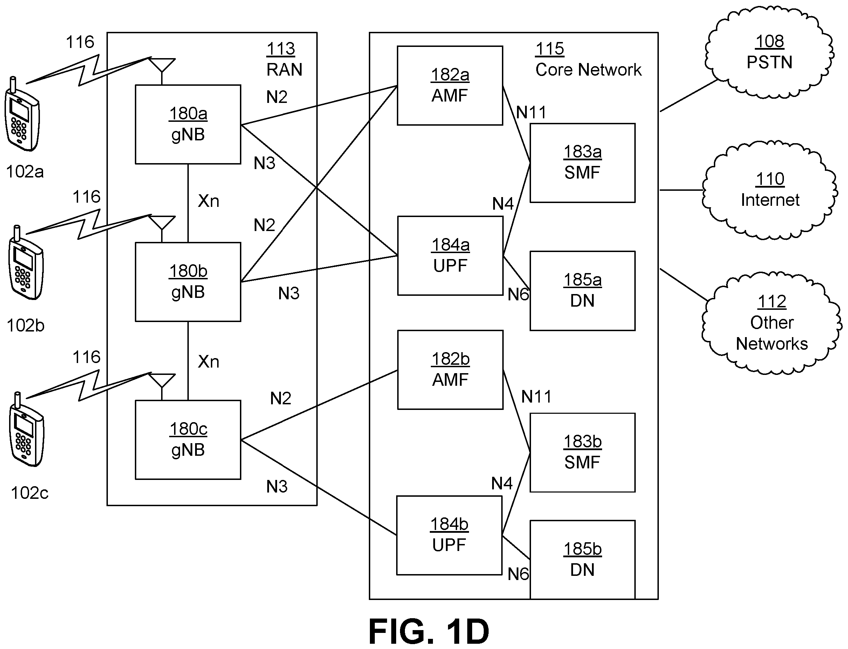

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may perform testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

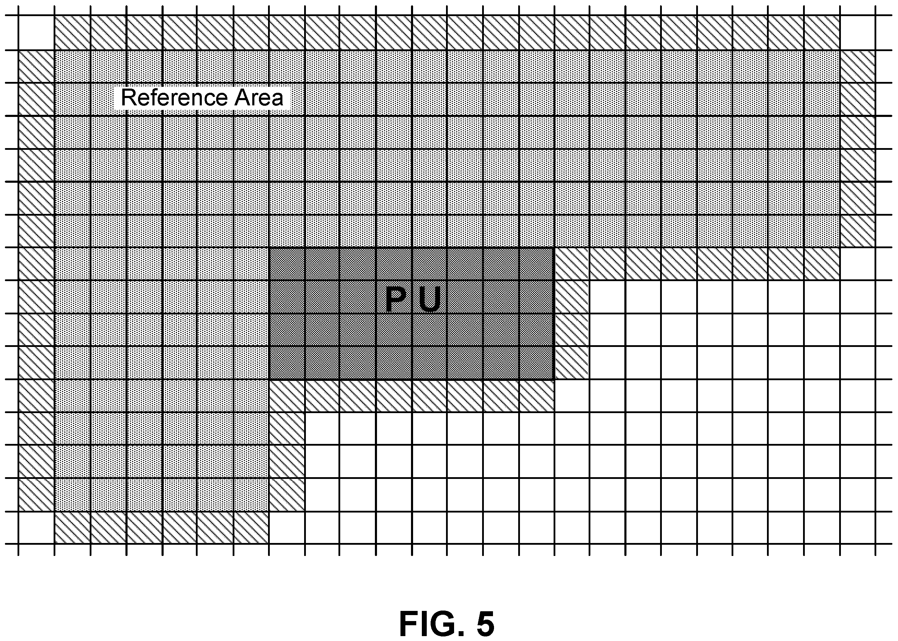

The aspects described and contemplated in this application may be implemented in many different forms. FIGS. 5-17 described herein may provide some examples, but other examples are contemplated. The discussion of FIGS. 5-17 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more operations or actions for achieving the described method. Unless a specific order of operations or actions is required for proper operation of the method, the order and/or use of specific operations and/or actions may be modified or combined. Additionally, terms such as "first", "second", etc. may be used in various examples to modify an element, component, operation, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

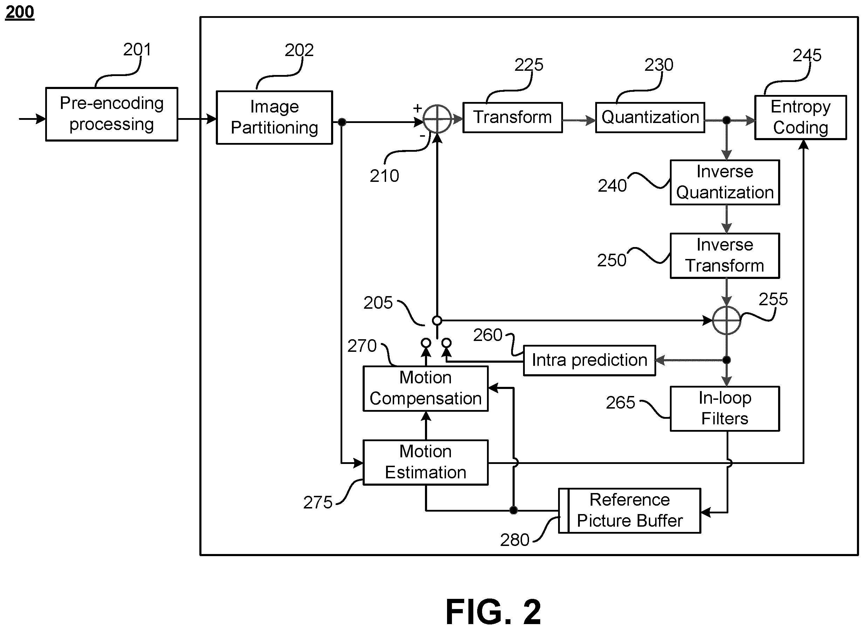

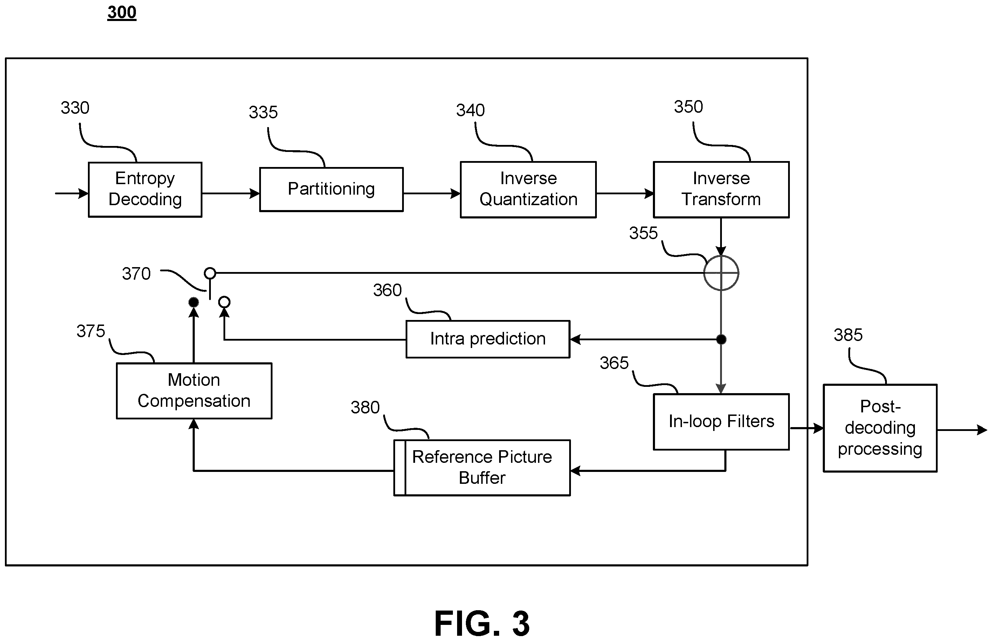

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether preexisting or future-developed, and extensions of any such standards and recommendations. Unless indicated otherwise, or technically precluded, the aspects described in this application may be used individually or in combination.

Various numeric values are used in examples described the present application, such as a number of operations, HoG bin values, block dimensions, template dimensions, filter dimensions, filtering parameters, number of prediction modes, number of pixels, number of reference lines, bit depth, bit values, parameter values, weight values, constant values, multiplier values, minimum values, maximum values, range values, true values, false values, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for example using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, such as picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filtering) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). In some examples (e.g., for a given picture) the contents of the reference picture buffer 380 on the decoder 300 side may be identical to the contents of the reference picture buffer 280 on the encoder 200 side (e.g., for the same picture).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

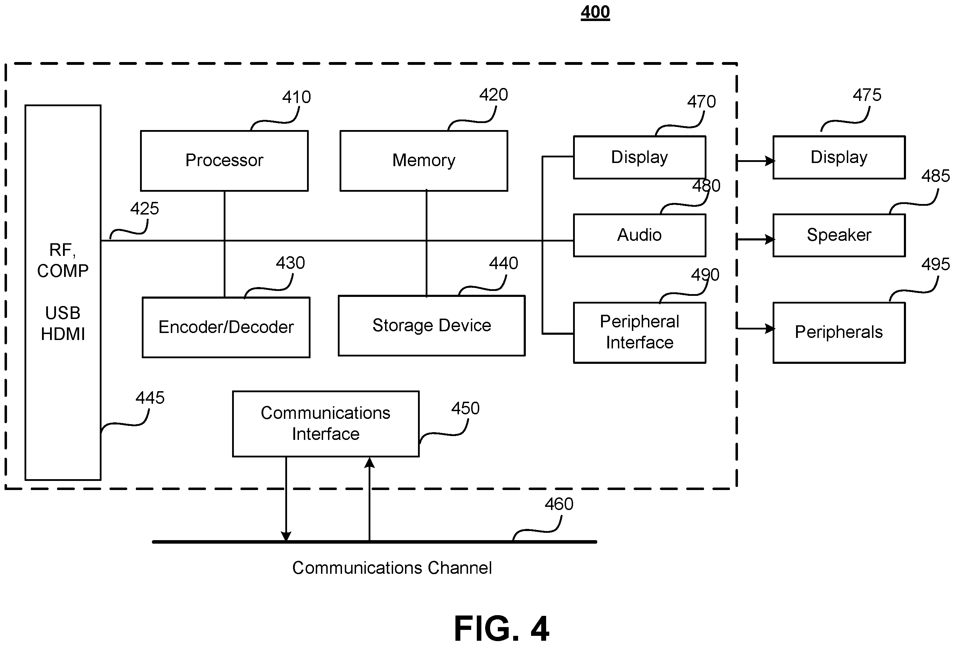

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder including, for example, entropy decoding, inverse quantization, inverse transformation, and differential decoding. In various examples, such processes also, or alternatively, include processes performed by a decoder of various implementations described in this application including, for example, filter regularization.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder including, for example, partitioning, differential encoding, transformation, quantization, and entropy encoding. In various examples, such processes also, or alternatively, include processes performed by an encoder of various implementations described in this application.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as, for example, flags to indicate selected modes (e.g., GL-CCCM, EIM, IntraTMP, IBC) are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, IPM signaling, DIMD flag, TMP flag, TIMD flag, EIP flag, MIP flag, indices, SGPM flag, TMRL flag, nnFlag, nnFlagChroma, DM flag, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

Systems, methods, and instrumentalities are disclosed for performing regularization in prediction filters. A device, which may be, for example, an encoder device for video encoding and/or a decoder device for video decoding, may determine for a picture block that a prediction mode is one of IntraTMP or IBC. The device may determine, using the prediction mode, a prediction block associated with the picture block. The device may generate, based on a current template and a reference template, a first matrix associated with pixel values in the reference template and/or a second matrix associated with vectors associated with the current template. The device may be configured to generate a regularization matrix. The device may be configured to determine, using the at least one matrix associated with the filtering function and the regularization matrix, filtering parameters. The device may filter the prediction block using the determined filtering parameters and may decode and/or encode the picture block using the filtered prediction block.

The disclosed systems, methods, and instrumentalities may apply in the field of video compression and may be employed with prediction employing, for example, IntraTMP and/or IBC modes. IntraTMP and/or IBC modes may be associated with sub-modes where the prediction may be further filtered with filtering parameters obtained via a reconstructed template. The disclosed systems, methods, and instrumentalities may employ regularization in connection with determining/computing filtering parameters. Applying regularization may improve the accuracy of the filtering parameters and thereby may improve the overall quality of the prediction.

The convolutional cross-component model (CCCM) may allow predicting chroma samples from reconstructed luma samples. The reconstructed luma samples may be down-sampled to match the lower resolution chroma grid if chroma sub-sampling is used. Top, left, or top and left reference samples may be used as templates for model derivation.

A single model or multi-model example of CCCM may be used. A multi-model example may use two models, where a model is derived for samples above the average luma reference value, and a model is derived for the rest of the samples. Multi-model CCCM mode may be selected for prediction units (PUs) which have at least 128 reference samples available.

The filter coefficients ci of the model may be calculated by minimizing MSE between predicted and reconstructed chroma samples in the reference (template) area. FIG. 5 illustrates an example of the reference area which includes of one or several lines of chroma samples above and left of the PU. For the multi-model CCCM mode, the two candidates may use luma samples collocated with the current chroma block to derive mean values which separate samples into two groups. The cost may be derived by applying the candidate CCP on a template, calculating the sum of absolute difference (SAD) between CCP predicted samples and reconstructed samples in the template.

FIG. 5 illustrates an example reference area (e.g., with its paddings) used to derive the filter coefficients. The MSE minimization may be performed by calculating autocorrelation matrix for the luma input and a cross-correlation vector between the luma input and chroma output. The matrix may be inverted to derive the coefficient values ci.

In CCCM, the model coefficients may be computed as solving a system of linear equations by Gaussian elimination:

$$\mathbf{A}^\top \boldsymbol{y} = (\mathbf{A}^\top \mathbf{A})\widehat{\boldsymbol{\beta}} \qquad (1a)$$

with the solution to the model coefficients $\hat{\beta}$ being

$$\widehat{\boldsymbol{\beta}} = (\mathbf{A}^\top \mathbf{A})^{-1}\mathbf{A}^\top \boldsymbol{y} \qquad (1b)$$

The matrix may be inverted. An example autocorrelation matrix may be LDL decomposed, and the final filter coefficients may be calculated using back-substitution. The process may follow (e.g., roughly) the calculation of the ALF filter coefficients in example video codecs. LDL decomposition may be selected (e.g., instead of Cholesky decomposition) to avoid using square root operations.

The autocorrelation matrix may be calculated using the reconstructed values of luma and chroma samples. The samples may be full range (e.g., between 0 and 1023 for 10-bit content) resulting in relatively large values in the autocorrelation matrix. This may include high bit depth operation during the model parameters calculation. Fixed offsets may be removed from luma and chroma samples in a PU for a model. This may drive down the magnitudes of the values used in the model creation and allow reducing the precision associated with the fixed-point arithmetic. 16-bit decimal precision may be used (e.g., instead of the 22-bit precision) of an example CCCM implementation. The model used for CCCM may be selected from, for example, among the following: convolution filter; gradient linear model (CLM); CCCM using non-downsampled luma samples; block-vector guided CCCM (BVG-CCCM); gradient and location based convolutional cross-component model (GL-CCCM); and/or CCCM with multiple down-sampling filters.

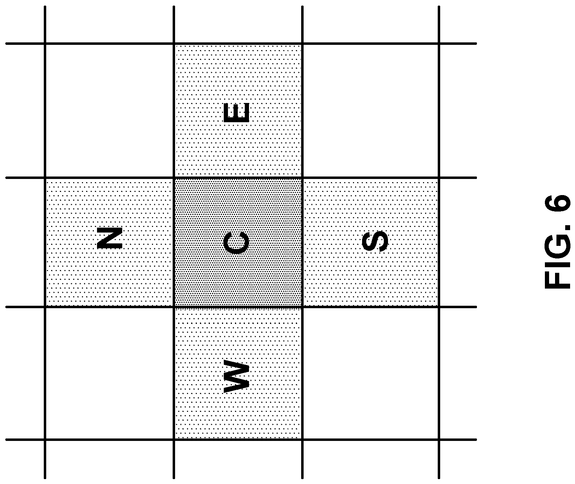

Convolution filters may be employed. In examples, a convolutional 7-tap filter may include a 5-tap plus sign shape spatial component, a nonlinear term, and a bias term. The input to the spatial 5-tap component of the filter may include a center (C) luma sample. which may be collocated with the chroma sample to be predicted and its above/north (N), below/south (S), left/west (W) and right/east (E) neighbors, as illustrated in FIG. 6. The nonlinear term P is represented as the square of the center luma sample C and scaled to the sample value range of the content:

$$P = ( C*C + midVal ) >> bitDepth$$

for 10-bit content, P is calculated as:

$$P = ( C*C + 512 ) >> 10$$

The bias term B may represent a scalar offset between the input and output (similarly to the offset term in CCLM) and may be set to middle chroma value (512 for 10-bit content). An output of the filter may be calculated as a convolution between the filter coefficients ci and the input values and clipped to the range of valid chroma samples:

$$predChromaVal = c0C + c1N + c2S + c3E + c4W + c5P + c6B \qquad (2)$$

FIG. 6 illustrates an example spatial part of a convolutional filter.

Features described herein may be associated with a gradient linear model (GLM). For YUV 4:2:0 color format, a gradient linear model (GLM) method may be used to predict the chroma samples from luma sample gradients. Two modes, for example, may apply: a two-parameter GLM mode and a three-parameter GLM mode.

Compared with the CCLM (e.g., instead of down-sampled luma values), the two-parameter GLM may utilize luma sample gradients to derive the linear model. When the two-parameter GLM is applied, the input to the CCLM process, e.g.,

the down-sampled luma samples L, may be replaced by luma sample gradients G. Parts (e.g., other parts) of the CCLM (e.g., parameter derivation, prediction sample linear transform) may be (e.g., may be kept) unchanged.

$$C = \alpha \cdot G + \beta \qquad (3a)$$

In the three-parameter GLM, a chroma sample may be predicted based on the luma sample gradients and down-sampled luma values with different parameters. The model parameters of the three-parameter GLM may be derived from 6 rows and columns adjacent samples by the LDL decomposition based MSE minimization method as used in the CCCM.

$$C = \alpha 0 \cdot G + \alpha 1 \cdot L + \alpha 2 \cdot \beta \qquad (3b)$$

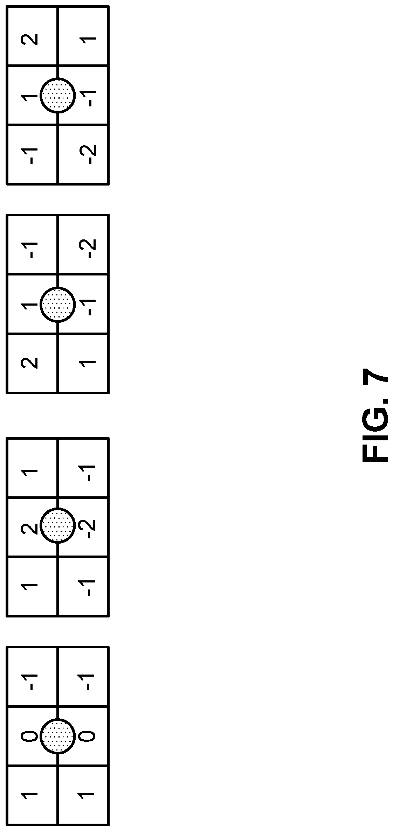

For signaling, if the CCLM mode is enabled to the current CU, a flag (e.g., an indication and flag may be used interchangeably as described herein) may be signaled to indicate whether GLM is enabled for Cb and Cr components. If the GLM is enabled, a flag may be signaled to indicate which of the two GLM modes is selected, and a syntax element may be signaled to select one of 4 gradient filters for the gradient calculation. FIG. 7 illustrates an example of four Sobel based gradient patterns for gradient linear model (GLM). Four gradient filters may be enabled for the GLM, as illustrated in FIG. 7.

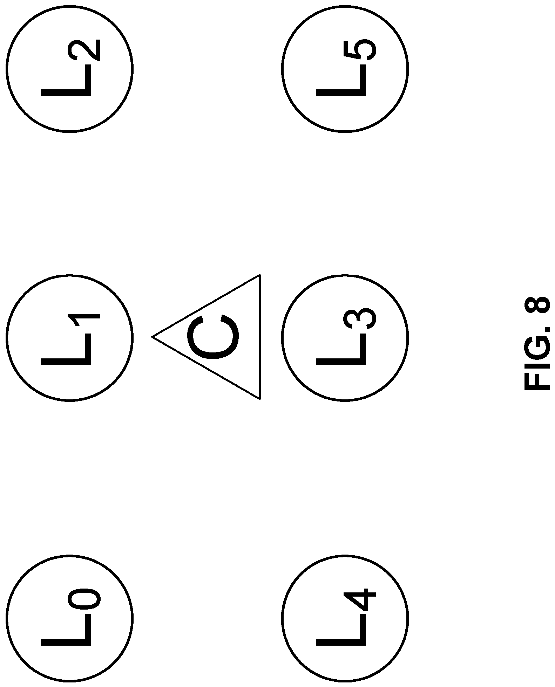

CCCM using non-downsampled luma samples may be employed. CCCM mode with a 3x2 filter using non-downsampled luma samples may be used, and may include 6-tap spatial terms, four nonlinear terms and a bias term. FIG. 8 illustrates an example of non-downsampled luma samples. The 6-tap spatial terms may correspond to 6 neighboring luma samples (e.g., L0, L1, ..., L5) around the chroma sample (i.e., C) to be predicted, and the four non-linear terms may be derived from the samples L0, L1, L2, and L3, as shown in FIG. 8. This may be represented as follows:

$$C = \sum_{i=0}^{5} \alpha_i \cdot (L_i - \text{offsetLuma}) + \sum_{i=6}^{9} \alpha_i \cdot (((L_{i-4} - \text{offsetLuma})^2 + \beta)$$

$$\gg bitDepth) + \alpha_{10} \cdot \beta + \text{offsetChroma} \qquad (4)$$

where $\alpha i$ is the coefficient, $\beta$ is the offset. In examples (e.g., like the CCCM design), up to 6 lines/columns of chroma samples above and left to the current CU (reference template) may be applied to derive the filter coefficients. The filter coefficients may be derived based on the same LDL decomposition method used in CCCM.

Features described herein may be associated with block-vector guided CCCM (BVG-CCCM). If the co-located luma prediction is coded with intra block copy mode (IBC) or IntraTMP (intra template matching) mode in intra slices, the BVG-CCCM mode may be used. In this mode, the block vectors of the co-located luma blocks, coded in IBC or intraTMP modes, may be used to determine the reference area for calculating the CCCM parameters. The prediction may be performed using the calculated model parameters and co-located luma samples. **Error! Reference source not found.** illustrates the reference area in BVG-CCCM method. The BVG-CCCM mode uses an 11-tap filter for cross-component prediction as follows:

$$predChromaVal = c0C + c1N + c2S + c3E + c4W + c5P(C) + c6P(N) + c7P(S) + c8P(W) + c9P(E) + c10B$$

$$(5)$$

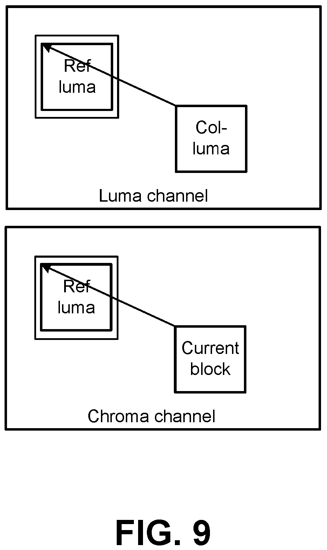

The input to the spatial 5-tap component of the filter may include a center (C) luma sample, which is collocated with the chroma sample to be predicted and its above/north (N), below/south (S), left/west (W) and right/east (E) neighbors, as illustrated in FIG. 6. The nonlinear term P may be represented as squares of the corresponding luma sample and B is the bias term. FIG. 9 illustrates an example reference area for block vector guided convolutional cross-component model (BVG-CCCM).

Five locations in the collocated luma block area may be scanned, and the associated block vectors may be used for determining the reference area for parameter calculation in BVG-CCCM method.

Features described herein may be associated with a gradient and location based convolutional cross-component model (GL-CCCM). GL-CCCM may map luma values into chroma values using a filter with inputs including a (e.g., one) spatial luma sample, two gradient values, two location information, a nonlinear term, and a bias term. GL-CCCM may use gradient and location information (e.g., instead of 4 spatial neighbor samples used in the CCCM filter). The GL-CCCM filter used for the prediction may be as follows:

$$predChromaVal = c0\ C + c1\ Gy\ + c2\ Gx\ + c3\ Y + c4\ X + c5\ P + c6\ B \qquad (6)$$

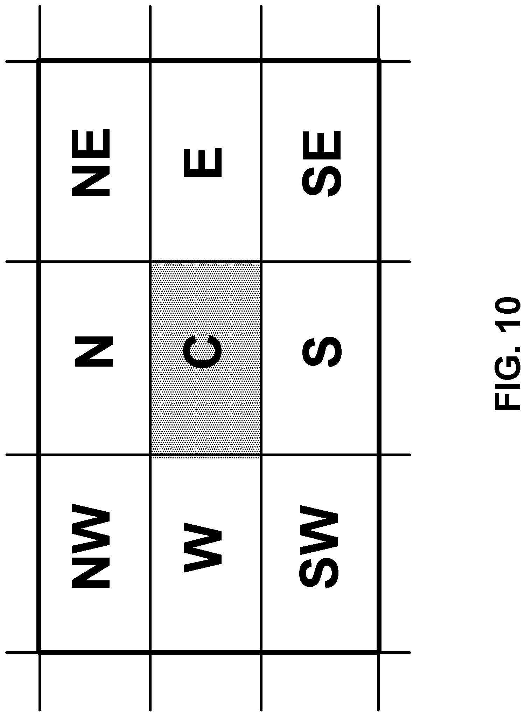

where Gy and Gx are the vertical and horizontal gradients, respectively, and are calculated as FIG. 10.

$$Gy = (2N + NW + NE) - (2S + SW + SE)$$

$$Gx = (2W + NW + SW) - (2E + NE + SE)$$

The Y and X are the spatial coordinates of the center luma sample. The remaining parameters of the parameters may be the same as CCCM. The reference area for the parameter calculation may be the same as CCCM. FIG. 10 illustrates an example of spatial samples used for gradient and location convolutional cross-component model (GL-CCCM).

The usage of the model may be signaled with a CABAC coded PU level flag. When it comes to signaling, GL-CCCM may be considered a sub-mode of CCCM. The GL-CCCM flag may be signaled, e.g., may only be signaled, if the (e.g., original) CCCM flag is true. GL-CCCM tool may have 6 modes for calculating the parameters: single-model GL-CCCM from above and left templates; single-model GL-CCCM from above template; single-model GL-CCCM from left template; multi-model GL-CCCM from above and left templates; multi-model GL-CCCM from above template; and multi-model GL-CCCM from left template. The encoder may perform an SATD search for the 6 GL-CCCM modes along with the existing CCCM modes to find the best candidates for full RD tests.

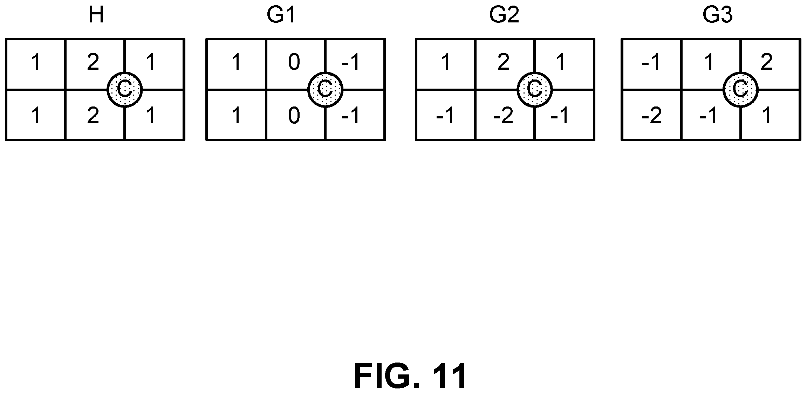

Features described herein may be associated with CCCM with multiple down-sampling filters. FIG. 11 illustrates example down-sampling filters used in cross-component models. Multiple down-sampling filters may be applied to a group of reconstructed luma samples in a CCCM. The linear combination of the down-sampled reconstructed samples may be multiplied by derived filter coefficients to form the final chroma predictor. The horizontal or vertical location of the center luma sample may be considered in the tested model. The cross-component models as follows may be tested as additional CCCM modes with a mode index signaled in the bitstream:

Model 1: predChroma = c0*H(C)+C1*G1(C)+c2*G2(C)+c3*G3(C)+c4*P(H(C))+c5 *P(G1(C))+c6*P(G2(C)) +c7*X+c8*Y+c9*B        (7a)

Model 2: predChroma = c0*H(C)+c1*H(W)+c2*H(E)+c3*G1(C)+c4*G1(W)+c5* G1(E)+c6*P(H(C))+c7*P(H (W))+c8*P(H(E))+c9*X+c10*B        (7b)

Model 3: predChroma = c0*H(C)+c1*H(NE)+c2*H(SW)+c3*G3(C)+c4*G3(NE)+ c5*G3(SW)+c6*P(H(C))+c7*P (H(NE))+c8*P(H(SW))+c9*Y+c10*B        (7c)

where H(-), G1($\cdot$), G2($\cdot$), G3($\cdot$) are various down-sampling filters as indicated in FIG. 11, C denotes the current chroma sample position, N, S, W, E, NE, SW are the positions around C, ci are filter coefficients, P and B are nonlinear term and bias term, and X and Y are the horizontal and vertical locations of the center luma sample with respect to the top-left coordinates of the block.

Extrapolation filter-based intra prediction (EIP) mode may be employed. In the EIP mode, the samples in a CU may be predicted from the top-left position to the bottom-right position by applying an extrapolation filter to neighboring reconstructed samples or predicted samples. The EIP mode may use a 15-tap filter for prediction as below:

$$pred_{(x,y)} = \sum_{i=0}^{14} \left( c_i \times t_{(x-offsetX_i, y-offsetY_i)} \right) \qquad (8)$$

where $pred_{(x,y)}$ is the predicted value at position (x, y) in the CU, ci is the filter coefficient, and the $t_{(x-offsetX_i, y-offsetY_i)}$ is the reconstructed samples or predicted samples.

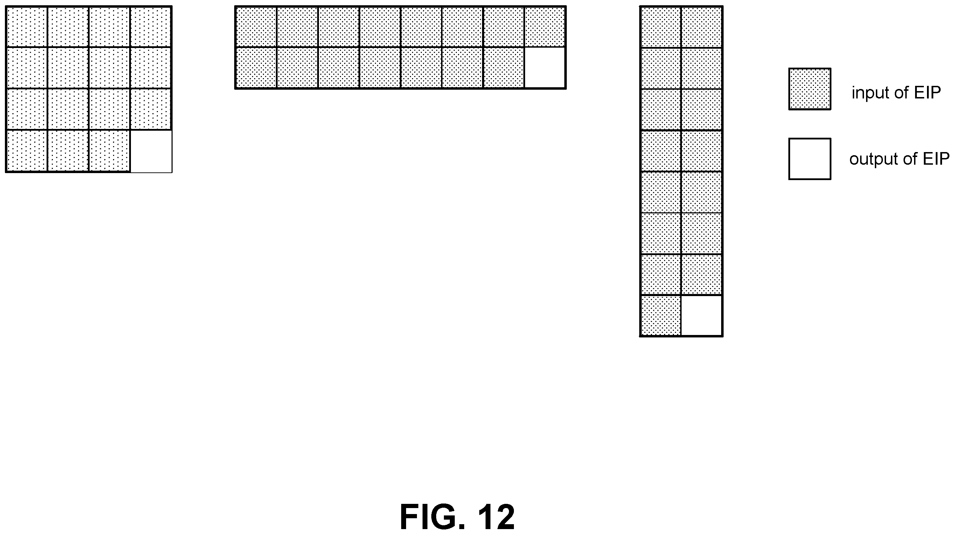

FIG. 12 illustrates three example extrapolation filter-based intra prediction (EIP) filter shapes.

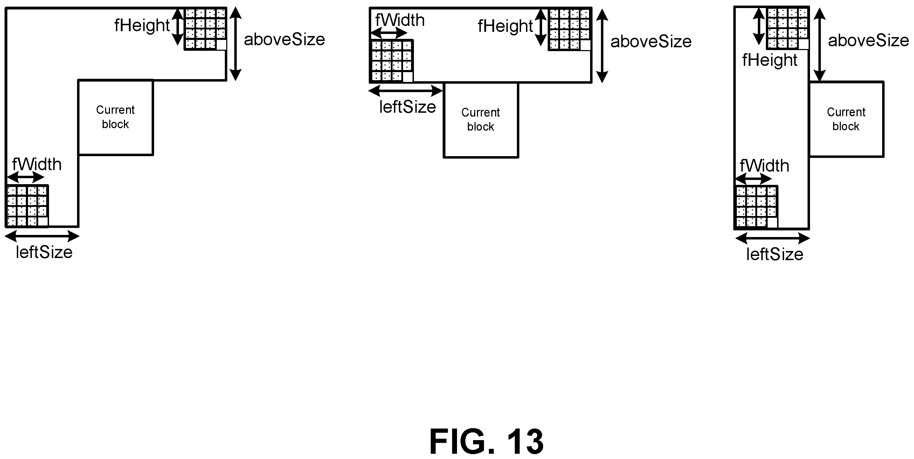

FIG. 13 illustrates three example types of reconstructed area for EIP filter. The EIP filter may be derived from the neighboring reconstructed samples or be inherited from the previous EIP coded blocks. There may be three EIP filter shapes and three types of reconstructed areas supported in video codecs, as shown in FIGS. 12 and 13, respectively.

For a CU coded in the EIP mode, an EIP merge flag may be signaled to indicate whether the EIP filter is inherited from previous blocks coded in EIP mode. Based on the EIP merge flag being true, an EIP merge list may be constructed from the spatial adjacent, spatial non-adjacent, temporal and history candidates. The position and inclusion order of the candidates may be the same as those used in CCP merge candidate list. An EIP merge index may be signaled to indicate which EIP merge candidate is selected. The filter shape and the filter coefficients of the selected candidate may be inherited to code the CU.

Based on the EIP merge flag being false, the EIP filter may be derived from the neighboring reconstructed samples (e.g., reference template), and the relevant syntax element may be signaled to indicate which one of the three types of reconstructed area and which one of the three filter shapes are used for the CU. The selected filter may move in the selected reconstructed area horizontally or vertically with a one-pixel step to construct the auto-correlation matrix and the cross-correlation vector. The calculation of coefficients from the auto-correlation matrix and the cross-correlation vector may be the same as that in CCCM.

Features described herein may be associated with regularized EIP or CCCM. The purpose of regularization may be to enforce conditions relating to, for example, sparsity, smoothness or constraining the solution values not to be high, such that stable predictive functions may be produced. For example, in an example vector framework, Tikhonov regularization optimizes over

$$\min_{x} \|Ax - y\|^2 + \lambda.\|x\|^2$$

to find a vector x that is a stable solution to regression. For a more generalized penalty on x modeled with matrix L, the following may be true:

$$\min_{x} \|Ax - y\|^2 + \|Lx\|^2$$

In CCCM or EIP, the model coefficients may be computed as solving a system of linear equations by Gaussian elimination:

$$\mathbf{A}^{\mathsf{T}}\boldsymbol{y} = (\mathbf{A}^{\mathsf{T}}\mathbf{A})\widehat{\boldsymbol{\beta}} \qquad (1a)$$

with the solution to the model coefficients β̂ being

$$\widehat{\boldsymbol{\beta}} = (\mathbf{A}^{\mathsf{T}}\mathbf{A})^{-1}\mathbf{A}^{\mathsf{T}}\boldsymbol{y} \qquad (1b)$$

L2-regularization may be applied to EIP. The model coefficients may be computed as:

$$\widehat{\boldsymbol{\beta}} = (\mathbf{A}^{\mathsf{T}}\mathbf{A} + \lambda\mathbf{I})^{-1}\mathbf{A}^{\mathsf{T}}\boldsymbol{y} \qquad (1c)$$

where $\lambda$ is the regularization parameter.

L2-regularization may be achieved by a diagonal matrix being added to the 'ATA' matrix. The remainder of EIP solver and prediction may be unchanged. For EIP, the value $\lambda$ is chosen as $\lambda = p_{EIP} \times 128$, where $p_{EIP} = 15$ is the number of filter taps in EIP. For CCCM, $\lambda = n_p \times 32$, where $n_p$ is the number of parameters in the model to be computed. The first (co-located luma) and the last (bias) terms may be unregularized by setting the top-left and bottom-right entries of the ridge identity matrix to zero.

Intra template matching prediction (IntraTMP) may be employed. IntraTMP may be an intra prediction mode that copies a prediction block, e.g., the best prediction block, from the reconstructed part of the current frame, whose L-shaped template matches the current template. For a predefined search range, the encoder may search for the most similar template to the current template in a reconstructed part of the current frame and use the corresponding block as a prediction block. The encoder may signal the usage of this mode, and the same prediction operation may be performed at the decoder side.

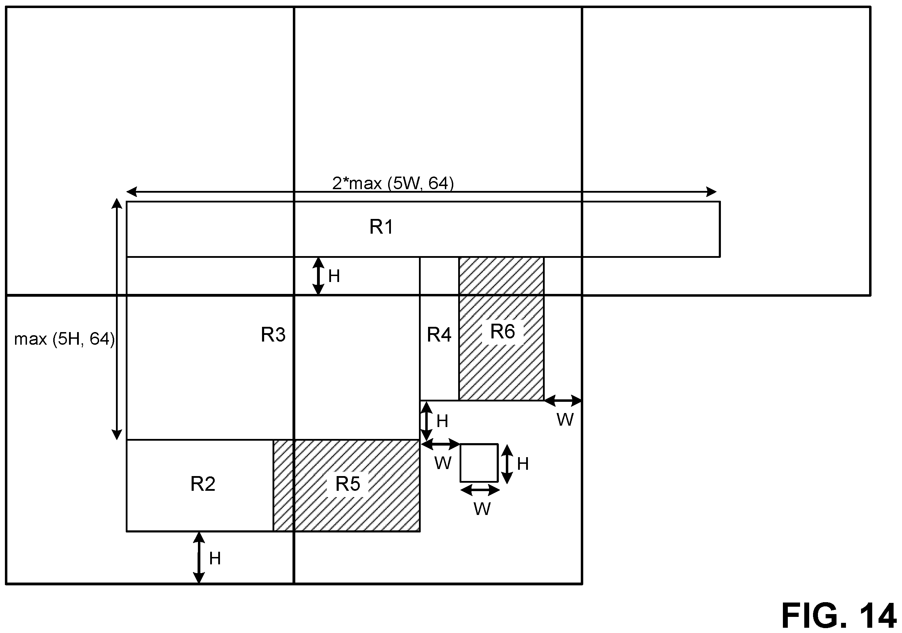

The prediction signal may be generated by matching the L-shaped, top-only, or left-only causal neighbor of the current block with another block in a predefined search area in FIG. 14. There may be 6 predefined search areas, e.g., R1 to R6 in FIG. 14, which include the reconstructed samples from the top and left CTUs and part of the reconstructed samples within the current CTU that are located above, left, bottom-left, and top-right to the current block.

IntraTMP may employ an implicit merge mode, where merge candidates are considered without signaling a merge flag or index. The reference positions pointed by the block vectors of (e.g., all) the adjacent and non-adjacent merge candidates (e.g., coded in IntraTMP or IBC mode) may be used as additional candidates beyond the default search areas. The same template matching cost may be used to compare the merge positions and the defaults ones. For bi-directional IBC merge candidate, two candidates may be retained corresponding to a reference frame. For IntraTMP, two candidates may be considered corresponding to the best candidate by template search and the coded candidate.

The sum of absolute differences (SAD) may be used as a cost function. A given search order of the 6 regions may be utilized, e.g., R4, R5, R6, R1, R2, and R3. Within a region, the decoder may construct a candidate list of up to "19" template matching block vectors that are ranked in ascending order according to the template cost (SAD). The following modes may be supported: single predictor; fusion of multiple predictors; sub-pel precision; and/or linear filter model. With respect to single predictor, a single predictor may be selected from the candidate list. With respect to fusion of multiple predictors, multiple predictors may be blended multiple to derive the final prediction block. The blending weights may be computed from the template matching cost of each predictor, or with Wiener-filter based weight derivation method. With respect to sub-pel precision, based on a single predictor being used, sub-pel precision may be used with 1/2-pel precision, 1/4-pel precision and 3/4-pel precision (e.g., with 8 possible directions). With respect to linear filter model, a linear filter may be learned between the reference template and current template, and the linear model may be applied to the reference block. This mode may be used for a single predictor when sub-pel precision is not used.

IntraTMP with local illumination compensation may be allowed. The following considerations may be taken. Usages of LIC and FLM (CCCM-like filtering) may be mutually exclusive for a given CU. Usages of LIC together with fusion in intra TMP may be allowed. Top-only and Left-only template usage for LIC model determination may be allowed for screen content coding. For camera-captured coding, the top-left template may be employed. Multi Mode Linear Model (MMLM) may be supported similarly to IBC-LIC, for screen content coding.

When LIC is used for a given CU, the intra TMP search process may employ MRSAD rather than SAD distortion function.

The dimensions of all regions (SearchRange_w, SearchRange_h) may be set proportional to the block dimension (BlkW, BlkH) to have a fixed number of SAD comparisons per pixel. That is:

$$SearchRange\_w = min(64, a * BlkW)$$

$$SearchRange\_h = min(64, a * BlkH)$$

where 'a' is a constant that controls the gain/complexity trade-off. In practice, 'a' may be equal to 5.

FIG. 14 illustrates an example intra template matching search area. To speed-up the template matching process, the search range of all search regions may be subsampled by a factor of 4. After finding a match, e.g., the best match, a refinement process may be performed. The refinement may be done via a second template matching search around the match, e.g., best match, with a reduced range.

The Intra template matching tool may be enabled for CUs with a size less than or equal to 64 in width and height. The maximum CU size for intra template matching may be configurable. The intra template matching prediction mode may be signaled at the CU level through a dedicated flag when DIMD is not used for a current CU.

Features described herein may be associated with filtered IBC prediction. Additional filtered IBC mode may be introduced, where a filter is applied to IBC predictor, which may be derived by minimizing MSE between a current and reference template.

Output of the filter may be calculated as follows:

$$predLumaVal = c0C + c1N + c2S + c3E + c4W + c5P + c6B$$

The nonlinear term P may be represented as a power of two of the center sample C and scaled to the sample value range of the content:

$$P = ( C*C + midVal ) >> bitDepth$$

The bias term B represents a scalar offset between the input and output and may be set to middle luma value (512 for 10-bit content).

The filtered mode may be used as an additional mode for non-merge IBC blocks, and may or may not be used together with IBC-LIC, IBC-CIIP or RR-IBC. For IBC merge modes, the filtering mode may be inherited when merge mode list is constructed. The mode flag may be signaled before the IBC-LIC flag.

Regularization may be considered for use with EIP and CCCM modes. Regularization may be considered for use with IntraTMP and IBC modes. IntraTMP and IBC may be associated with matrix inversion with respect to filtered prediction. The prediction of IntraTMP and IBC may be filtered, with a flag signaled to the decoder, and the filter parameters may be computed to minimize the error between the reconstructed template and the predicted template. The involved matrix inversion may employ additional regularization.

Regularization may be applied to the matrix inversion associated with IntraTMP/IBC filter calculations. The filtering parameters calculation may be improved and the overall quality of the prediction may be improved.

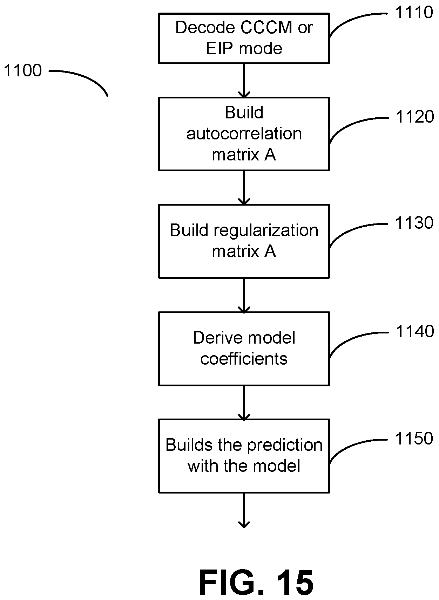

FIG. 15 illustrates an example implementation for building prediction with convolutional cross-component model (CCCM) or EIP mode. An example process for building the (cross-component) prediction for a block coded with CCCM or EIP mode is summarized in FIG. 15. It may be applied to other coding modes which derive a linear model for predicting the current block with previously reconstructed samples or data.

At 1110, a flag (e.g., syntax element) may be decoded or inferred from decoded information. The flag may indicate which model to use to build the prediction.

At 1120, an auto correlation matrix A of size (nb x ns) may be built from the reconstructed neighboring data (e.g., reconstructed neighboring samples of the reference template), where ns is the number of reconstructed neighboring samples of the reference template and nb is the number of coefficients. At 1130, a regularization matrix R may be built. The coefficient of the model may be derived at 1140 by solving the following equation:

$$\widehat{\boldsymbol{\beta}} = (\mathbf{A}^\top \mathbf{A} + \boldsymbol{R})^{-1} \mathbf{A}^\top \boldsymbol{y}$$

where A is the autocorrelation matrix, R is the regularization matrix, y is a vector (size ns) of the reconstructed samples of the current component (e.g., luma component) in the reference template and $\beta$ is a vector (size nb) of the estimated coefficients of the model.

At 1150, the model may be used to build the prediction of the current component (e.g., chroma component) for the current block from the reconstructed samples of another component (e.g., luma component) of the current block.

Features described herein may be associated with IBC/IntraTMP filtering. The prediction generated by IntraTMP and IBC may be further filtered with a filtering parameter computed from the reconstructed template. The block vectors obtained with IBC/IntraTMP may be used to copy pixels from a reference block. The resulting prediction may be (e.g., may be modified) as in the function below:

Y = c0C + c1N + c2S + c3E + c4W + c5P + c6B

where C,N,S,E,W are the central, north, south, east, west pixels of the current pixel (as shown in FIG. 6), P is the power 2 term, and B is the bias term. c1,c2,c3,c4,...,c6 may be the filtering parameters. Y may be the filtered prediction value.

The filter parameter may be obtained by minimizing the mean square error between the current and reference template. The reference template may be associated with the use of C, N, S, E, W, P, and B. The Y value may correspond to the current template. For N points in the current template, N equations may be written in the following matrix form:

$$Y = \mathbf{A}c$$

Y is the vector obtained from the current template. A is a matrix with inputs being C,N,S,E,W, P and B, and c is the filter parameters c1,c2,c3,c4,...,c6. The filter parameters may be obtained by the matrix inversion:

$$c = (\mathbf{A}^\top \mathbf{A})^{-1} \mathbf{A}^\top Y$$

$\mathbf{A}^\top\mathbf{A}$ may be denoted as ATA matrix, $\mathbf{A}^\top\boldsymbol{Y}$ may be denoted as ATY matrix.

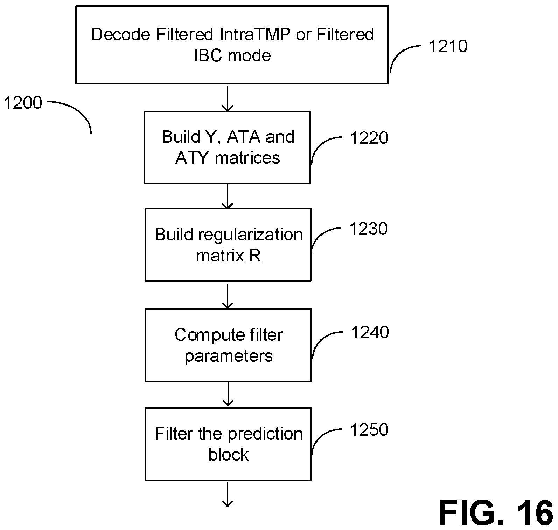

Regularization may be applied to generating filtering parameters. FIG. 16 illustrates an example regularized intra block copy (IBC)/intra template matching prediction (TMP) filtering implementation. The filtering parameters calculation for IntraTMP filtering and IBC filtering modes may be altered. A regularization factor may be considered. The matrix inversion may be augmented with a regularization factor. ATA and ATY matrices may be calculated as described herein. The ATA matrix may be augmented with a regularization matrix R. The matrix inversion may be as follows:

$$c = (\mathbf{A}^\top \mathbf{A} + \mathbf{R})^{-1} \mathbf{A}^\top \boldsymbol{y}$$

The obtained parameters may be used for filtering the prediction block.

Referring to FIG. 16, at 1210, a flag (e.g., syntax element) may be decoded or inferred from other decoded information. The flag may indicate if IBC/IntraTMP filter is used. At 1220, Y, ATA and ATY matrices may be built from the current and reference templates. At 1230, a regularization matrix R may be built. The coefficient of the model may be derived at 1240 by solving the following equation:

$$c = (\mathbf{A}^\top \mathbf{A} + \mathbf{R})^{-1} \mathbf{A}^\top \boldsymbol{y}$$

At 1250, the model may be used to filter the prediction block.

The regularization factor may be fixed for IBC and IntraTMP. A (e.g., different) regularization factor may be assigned per mode and/or per block size. The regularization factor may be signaled for a sequence, via higher level parameters such as, for example, SPS parameters.

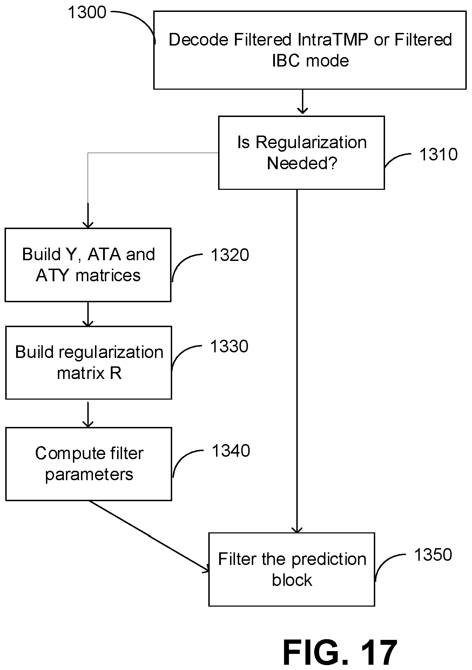

Regularization of predictive filtering parameters may be adaptively applied. FIG. 17 illustrates an example adaptive regularization implementation. The application of the regularization factor may be made adaptive to local statistics. For example, if the IBC/IntraTMP prediction is satisfactory, further regularization may not be applicable. To assess the quality of the prediction, the reconstructed template may be considered.

The prediction specified by the block vector of IBC/IntraTMP may be assessed on the reconstructed template. If the template cost is above a threshold, the prediction may not be considered satisfactory. The regularization may be applied to reduce the overfitting to the current template. The regularization may not be applied.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A device for video decoding comprising:
   a processor configured to:

   determine for a picture block a prediction mode is one of intra template matching (IntraTMP) mode or intra-block copy (IBC) mode;
   determine, using the prediction mode, a prediction block associated with the picture block;
   generate, based on a current template and a reference template, at least one matrix associated with a filtering function;
   generate a regularization matrix;
   determine, using the at least one matrix associated with the filtering function and the regularization matrix, filtering parameters;
   filter the prediction block using the determined filtering parameters; and
   decode the picture block using the filtered prediction block.

2. A device for video encoding comprising:

   determine for a picture block a prediction mode is one of intra template matching (IntraTMP) mode or intra-block copy (IBC) mode;
   determine, using the prediction mode, a prediction block associated with the picture block;
   generate, based on a current template and a reference template, at least one matrix associated with a filtering function;
   generate a regularization matrix;
   determine, using the at least one matrix associated with the filtering function and the regularization matrix, filtering parameters;
   filter the prediction block using the determined filtering parameters; and
   encode the picture block using the filtered prediction block.

3. The device of claim 1 or 2, wherein the at least one matrix associated with the filtering function comprises a first matrix associated with pixel values in the reference template.

4. The device of claim 3, wherein the at least one matrix associated with the filtering function further comprises a second matrix associated with vectors associated with the current template.

5. The device of any of claims 1-4, wherein the processor configured to generate the regularization matrix is further configured to generate the regularization matrix based on the prediction mode.

6. The device of any of claims 1-4, wherein the processor configured to generate the regularization matrix is further configured to generate the regularization matrix based on the prediction mode and a block size.

7. The device of any of claims 1-4, wherein the processor configured to generate the regularization matrix is further configured to generate the regularization matrix based on a received parameter value.

8. The device of any of claims 1-7, wherein the processor is further configured to determine, based on a comparison of the prediction block with a reconstructed template, a template cost exceeds a threshold.

9. The device of 8, wherein the processor is further configured to:

   determine for a second picture block a second prediction mode is one of intra template matching (IntraTMP) mode or intra-block copy (IBC) mode;
   determine, using the second prediction mode, a second prediction block associated with the picture block;
   determine, based on a comparison of the second prediction block with a reconstructed template, a second template cost does not exceed the threshold; and
   on a condition the second template cost does not exceed the threshold, determine second filtering parameters using the at least one matrix associated with the filtering function, and filter the second prediction block using the determined second filtering parameters.

10. A method of video decoding comprising:

    determining for a picture block a prediction mode is one of intra template matching (IntraTMP) mode or intra-block copy (IBC) mode;
    determining, using the prediction mode, a prediction block associated with the picture block;
    generating, based on a current template and a reference template, at least one matrix associated with a filtering function;
    generating a regularization matrix;
    determining, using the at least one matrix associated with the filtering function and the regularization matrix, filtering parameters;
    filtering the prediction block using the determined filtering parameters; and
    decoding the picture block using the filtered prediction block.

11. A method of video encoding comprising:

    determining for a picture block a prediction mode is one of intra template matching (IntraTMP) mode or intra-block copy (IBC) mode;
    determining, using the prediction mode, a prediction block associated with the picture block;
    generating, based on a current template and a reference template, at least one matrix associated with a filtering function;
    generating a regularization matrix;
    determining, using the at least one matrix associated with the filtering function and the regularization matrix, filtering parameters;
    filtering the prediction block using the determined filtering parameters; and
    encoding the picture block using the filtered prediction block.

12. The method of claim 10 or 11, wherein the at least one matrix associated with the filtering function comprises a first matrix associated with pixel values in the reference template and a second matrix associated with vectors associated with the current template.

13. The method of any of claims 10-12, wherein generating the regularization matrix comprises generating the regularization matrix based on one or more of the prediction mode, a block size, or a received parameter value.

14. The method of any of claims 10-13, further comprising:

    determining, based on a comparison of the prediction block with a reconstructed template, that a template cost exceeds a threshold;

determining for a second picture block a second prediction mode is one of intra template matching (IntraTMP) mode or intra-block copy (IBC) mode;

determining, using the second prediction mode, a second prediction block associated with the picture block;

determining, based on a comparison of the second prediction block with a reconstructed template, a second template cost does not exceed the threshold; and

on a condition the second template cost does not exceed the threshold, determining second filtering parameters using the at least one matrix associated with the filtering function, and filtering the second prediction block using the determined second filtering parameters.

**15.** Video data comprising data representative of picture block encoded in accordance with any of claims 11-14.

**FIG. 1A**

**FIG. 1B**

**FIG. 1C**

**FIG. 1D**

**FIG. 2**

EP 4 676 050 A1

**300**

FIG. 3

**400**

RF, COMP USB HDMI

Processor 410

Memory 420

Encoder/Decoder 430

Storage Device 440

Display 470

Audio 480

Peripheral Interface 490

425

445

Communications Interface 450

Display 475

Speaker 485

Peripherals 495

460

Communications Channel

EP 4 676 050 A1

**FIG. 4**

Reference Area

PU

FIG. 5

FIG. 6

**FIG. 7**

**FIG. 8**

EP 4 676 050 A1

**FIG. 9**

| NW | N | NE |
|----|---|----|
| W | C | E |
| SW | S | SE |

**FIG. 10**

H

| 1 | 2 | 1 |
|---|---|---|
| 1 | 2 | 1 |

G1

| 1 | 0 | -1 |
|---|---|---|
| 1 | 0 | -1 |

G2

| 1 | 2 | 1 |
|---|---|---|
| -1 | -2 | -1 |

G3

| -1 | 1 | 2 |
|---|---|---|
| -2 | -1 | 1 |

# FIG. 11

input of EIP

output of EIP

FIG. 12

FIG. 13

EP 4 676 050 A1

FIG. 14

EP 4 676 050 A1

**FIG. 15**

EP 4 676 050 A1

```
┌─────────────────────────────┐
│ Decode Filtered IntraTMP or  │──── 1210
│     Filtered IBC mode        │
└─────────────────────────────┘
              │
              ▼
      ┌──────────────────┐
1200  │  Build Y, ATA and │──── 1220
      │   ATY matrices    │
      └──────────────────┘
              │
              ▼
      ┌──────────────────┐
      │ Build regularization │──── 1230
      │     matrix R      │
      └──────────────────┘
              │
              ▼
      ┌──────────────────┐
      │  Compute filter   │──── 1240
      │    parameters     │
      └──────────────────┘
              │
              ▼
      ┌──────────────────┐
      │ Filter the prediction │──── 1250
      │       block       │
      └──────────────────┘
              │
              ▼
```

**FIG. 16**

EP 4 676 050 A1

**FIG. 17**

| | Europäisches Patentamt<br>European Patent Office<br>Office européen des brevets | **EUROPEAN SEARCH REPORT** | **Application Number**<br><br>EP 24 30 6091 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG2025 ; m66954 29 March 2024 (2024-03-29), XP030316747, Retrieved from the Internet: URL:https://jvet-experts.org/doc_end_user/ documents/33_Teleconference/wg11/JVET-AG20 25-v1.zip JVET-AG2025-v1.docx [retrieved on 2024-03-29] * page 26, paragraph 3.1.19 - page 29, paragraph 3.2.2 * * page 64, paragraph 3.2.29.6 * ----- | 1-15 | INV.<br>H04N19/176<br>H04N19/593 |
| A | HONGDONG QIN (TCL) ET AL: "AHG12: Regularized EIP", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0095 10 April 2024 (2024-04-10), XP030317361, Retrieved from the Internet: URL:https://jvet-experts.org/doc_end_user/ documents/34_Rennes/wg11/JVET-AH0095-v1.zi p JVET-AH0095-v1.docx [retrieved on 2024-04-10] * the whole document * ----- | 1-15 | **TECHNICAL FIELDS SEARCHED (IPC)**<br><br>H04N |

-/--

The present search report has been drawn up for all claims

| Place of search | Date of completion of the search | Examiner |
|---|---|---|
| Munich | 15 November 2024 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 30 6091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YOUVALARI (NOKIA) R G ET AL: "EE2-2.1: Block vector guided CCCM", 31. JVET MEETING; 20230711 - 20230719; GENEVA; (THE JOINT VIDEO EXPLORATION TEAM OF ISO/IEC JTC1/SC29/WG11 AND ITU-T SG.16 ), , no. JVET-AE0100 4 July 2023 (2023-07-04), XP030311315, Retrieved from the Internet: URL:https://jvet-experts.org/doc_end_user/ documents/31_Geneva/wg11/JVET-AE0100-v1.zi p JVET-AE0100-v1.docx [retrieved on 2023-07-04] * the whole document * ----- | 1-15 | |
| A | ZHANG (BYTEDANCE) K ET AL: "Non-EE2: On BVG-CCCM", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0203 ; m67297 10 April 2024 (2024-04-10), XP030317630, Retrieved from the Internet: URL:https://jvet-experts.org/doc_end_user/ documents/34_Rennes/wg11/JVET-AH0203-v1.zi p JVET-AH0203.docx [retrieved on 2024-04-10] * the whole document * ----- | 1-15 | TECHNICAL FIELDS SEARCHED (IPC) |

The present search report has been drawn up for all claims

| Place of search | Date of completion of the search | Examiner |
|---|---|---|
| Munich | 15 November 2024 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**page 2 of 2**